(19) Europäisches Patentamt
European Patent Office
Office européen des brevets

(11) EP 0 579 321 B1

(12) # EUROPEAN PATENT SPECIFICATION

(45) Date of publication and mention of the grant of the patent:
**03.09.1997 Bulletin 1997/36**

(51) Int Cl.[6]: **C08J 9/14**, C08J 9/00 // C08L61/06

(21) Application number: **93202010.0**

(22) Date of filing: **08.07.1993**

(54) **Process for producing a mainly closed cell phenolic foam**

Verfahren zur Herstellung von hauptsächlich geschlossenzelligem Phenolharzschaum

Procédé de préparation de mousse phénolique à cellules essentiellement fermées

(84) Designated Contracting States:
**AT BE CH DE DK ES FR GB GR IE IT LI LU MC NL PT SE**

(30) Priority: **13.07.1992 BE 9200648**

(43) Date of publication of application:
**19.01.1994 Bulletin 1994/03**

(73) Proprietor: **RECTICEL**
**1200 Brussels (BE)**

(72) Inventors:
- **Wallaeys, Bart**
**B-9230 Wetteren (BE)**
- **Spanhove, Peter**
**B-9260 Serskamp (BE)**

(74) Representative: **Callewaert, Jean et al**
**GEVERS Patents,**
**Brussels Airport Business Park,**
**Holidaystraat 5**
**1831 Diegem (BE)**

(56) References cited:
- **No relevant documents disclosed**

Remarks:
The file contains technical information submitted after the application was filed and not included in this specification

EP 0 579 321 B1

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European Patent Convention).

Printed by Jouve, 75001 PARIS (FR)

## Description

The present invention relates to a mainly closed cell phenolic foam comprising a phenolic resin and having a closed cell content of at least 80 % and to a process for producing such a closed cell phenolic foam.

In practice, such phenolic foams are mainly used as insulating material. For this application, it is important for the foam to have a sufficiently high closed cell content. As a matter of fact, a high content of closed cells is required to obtain a foam having a low thermal conductivity coefficient and further to avoid moisture absorption by the foam.

European Patent Application No 0 170 357 discloses a process for producing phenolic foam which corresponds to the hereabove given general description. According to this latter patent application, it is essential to control the temperature of the curing phenolic resin in such a manner that it does not rise upto above 85°C. In this way, the rupture of a too large number of cells during the curing, resulting amongst other in bad insulation properties is avoided.

Such a limitation of the temperature during the curing involves, however, that the curing process cannot always be controlled optimally. Indeed, by using higher temperatures during the curing, a better curing could otherwise be obtained.

An object of the present invention is therefore to provide a mainly closed cell phenolic foam of the hereinabove defined type, during the production of which the temperature of the curing phenolic foam system may rise up to higher values without resulting in the rupture of a too large number of cells.

To this end, the closed cell phenolic foam of the present invention comprises an either or not alkylated morpholine which is fluorated whether completely or not, and which corresponds to the following general structural formula :

$$C_n H_x F_y NO$$

wherein :

$$n \geq 4$$

$$x = 2n + 1 - y$$

$$y = 2n + 1 - x.$$

More in particular, the phenolic foam comprises preferably perfluoro-N-methyl morpholine.

According to the present invention it was found that the presence of the above-identified morpholine permits the closed cell phenolic foam, having a closed cell content of at least 80 %, to be prepared at higher temperatures.

In the process according to the present invention, wherein a foam system comprising at least a phenolic resin and a blowing agent is cured, the curing is effected in the presence of an either or not alkylated morpholine which is fluorated whether completely or not, and which corresponds to the following general structural formula :

$$C_n H_x F_y NO$$

wherein :

$$n \geq 4$$

$$x = 2n + 1 - y$$

$$y = 2n + 1 - x.$$

The addition of this morpholine does not only result in a reduction of the rupture of the cells at higher temperatures but moreover in a less friable or in other words a more flexible foam.

The foam system used in the process according to the present invention may comprise further a foam stabilizer.

For the countries which are designated in EP-A-0 603 213, i.e. for BE, CH, DE, ES, FR, GB, IT, LI, NL and SE, the process according to the present invention is further characterized in that this foam stabilizer is substantially free of fluorochemical surfactants. Such a process is new with respect to EP-A-0 603 213 and EP-A-0 606 252 as prior art under Art. 54(3) EPC since according to these latter patent applications use has necessarily to be made of fluorochemical surfactants.

In an embodiment of the process according to the invention, which appeared to be particularly effective, the curing is effected in the presence of perfluoro-N-methylmorpholine.

In a particular embodiment of the process according to the invention, said blowing agent comprises up to 50 % by weight at the most, and preferably up to 5 % by weight at the most of completely halogenated chlorofluorohydrocarbons.

In a preferred embodiment of the process according to the invention, said blowing agent is substantially free of completely halogenated chlorofluorohydrocarbons. In that case, it comprises preferably a physical blowing agent from the group of the hydrogenated chlorofluorohydrocarbons such as HCFC 141b, HCFC 123, HCFC 22, HCFC 142b and HCFC 134a, the incompletely halogenated hydrocarbons such as 2-chloropropane or the hydrocarbons such as isopentane, n-pentane, cyclopentane and hexane, or a combination of these physical blowing agents.

Generally it is believed that blowing agents consisting of completely halogenated hydrocarbons (CFC's) have a damaging effect on the protective ozone layer above the earth. However, these CFC's have ideal properties for obtaining fine cellular phenolic foams with a good insulation coefficient. Now it was found that also other physical blowing agents, such as for example the partially hydrogenated chlorofluorohydrocarbons (HCFC's) permit to obtain analogous results when used in combination with a morpholine as defined hereinabove and in particular with perfluoro-N-methylmorpholine. Indeed, the use of such a morpholine results in obtaining a finer cellular structure. This has been observed in particular clearly for perfluoro-N-methylmorpholine.

In a preferred embodiment of the process according to the invention, the foam temperature is allowed to rise during the curing upto a temperature higher than 85°C, which temperature is preferably situated between 87 and 130°C and more particularly between 88 and 95°C.

The application of such high temperatures in combination with the use of a hereabove defined morpholine, such as perfluoro-N-methylmorpholine, permits to produce phenolic foams which have the same open cell content and also a same thermal conductivity coefficient as phenolic foams prepared at lower temperatures but which are, on the other hand, better cured. It has been observed that, due to this better curing, a foam is obtained which is less friable and which has moreover still a good rigidity. Both the rigidity and the friability are important properties of the phenolic foam which is used for example as floor insulation or for example also in the shape of semi-cylindrical scales which can be snapped into one another around a duct which is to be insulated.

A further advantage of higher temperatures during the curing is the higher curing speed and therefore also the shorter production process.

Further particularities and advantages of the invention will become apparent from the following description of some embodiments of a process for producing a mainly closed cell phenolic foam according to the invention. This description is only given by way of example and does not limit the scope of the invention.

The invention in general relates to a process for producing a mainly closed cell phenolic foam by curing a foam system comprising at least a phenolic resin and a blowing agent. In particular, there is obtained a phenolic foam having at least 80 % closed cells and preferably even at least 90 % closed cells.

By the expression "foam system", there is meant here a previously prepared phenolic resin which can still react further by addition of heath and/or of a catalyst and to which there is added at least a blowing agent so that a mixture or more particularly an emulsion is obtained which foams during the further reaction of the phenolic resin. This foaming is caused by the blowing agent which expands due to the supplied heat but especially also due to the heat released during the further exothermic reaction of the phenolic resin.

The phenolic resin is produced by condensation of an either or not substituted phenol and/or phenol derivative and an aldehyde. The molecular ratio between the aldehyde and the phenol is smaller than 4. The phenolic resin may be either of the resol or of the novolac type.

As phenol derivatives, use can be made of either or not alkylated or aryl substituted phenol compounds having as general structural formula :

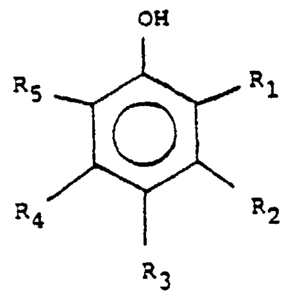

wherein $R_1$ to $R_5$ represent hydrogen atoms, alkyl groups, aryl groups, hydroxyl groups or a combination thereof. Important examples hereof are phenol, cresols, xylenols, ortho-, meta- or para substituted higher phenols, resorcinol, cathechol ; hydroxyquinone ; β-phenylalkyl substituted phenols, etc... Also polynuclear phenol derivatives, such as for example bisphenols or tri- or tetranuclear phenol compounds are appropriate for preparing the concerned phenolic foams. Further use can be made of combinations of all of these compounds.

As aldehydes, use can also be made, in addition to the most conventional formaldehyde, of higher homologues such as glyoxal, acetaldehyde, benzaldehyde, furfural, choral, etc... Also substances which are able to release aldehydes under the reaction circumstances may be appropriate (for example paraformaldehyde).

For the production of resol resins, the condensation between the phenol (derivative) and the aldehyde is effected under alkaline conditions. Use is made hereto as catalysts of hydroxides, carbonates or organic amines. Preferably, use is made of less than 5 % by weight of catalyst in the total reaction mixture.

The condensation is effected most commonly at temperatures between 60°C and 150°C and is interrupted in a time which comprises usually less than 8 hours. In the production process of the resol resins, water is usually added serving often as a solvent for the aldehyde. The technology for producing these resol resins may be of the conventional type wherein, after the development of the condensation, the reaction is slowed down by a gradual decrease of the temperature and is stopped completely by neutralization of the alkaline catalyst. The technology may also be of the "ion exchange" type. In this case, use is made of various ion exchange resins for making the phenolic resin substantially free of ions. Such resins show after the production often also a higher stability than the resins of the hereabove described conventional type.

For the production of novolacs it is known that the aldehyde/phenol (derivative) ratio is smaller than 1. Preferably this ratio is situated between 0.3 and 1. The condensation occurs most usually under acid or neutral conditions. Use is made hereto either of strong acids, such as for example sulfuric acid and hydrochloric acid, or of weaker acids, such as for example oxalic acid or phosphoric acid. The novolacs may also be synthesised by means of specific metal catalysts such as for example $Zn(acetate)_2$.

In contrast to the resols, an aldehyde donor has always to be added, as it is already known, for the curing of novolacs such as for example an active resol resin or substances such as for example hexamethylenetetramine, paraformaldehyde, trioxane, dioxolane, etc... Preferably, use is made of a concentration of between 1 and 30 parts by weight of aldehyde-donor with respect to 100 parts by weight of novolac.

After the synthesis of the resol or novolac resin, the excess water is removed and the final product is subsequently separated off and can possibly be further converted to for example a resol, respectively novolac solution, derivative, etc....

For the production of the phenolic foam, a physical blowing agent is added to the so-obtained condensation product of phenol or phenol derivative and aldehyde. This blowing agent is more particularly emulsified into the viscous mass of the phenolic resin.

As blowing agent, use can be made of the known completely halogenated chlorofluorohydrocarbons (CFC's). Due to the negative effects of such hydrocarbons onto the ozone layer, a physical blowing agent is used in a preferred embodiment comprising upto 50 % at the most of these CFC's and preferably only upto 5 % CFC's. Ideally, a blowing agent is used which is substantially free of CFC's.

Particularly suited blowing agents different from the CFC's are the hydrogenated chlorofluorohydrocarbons such as HCFC 141b, HCFC 123, HCFC 22, HCFC 142b and HCFC 134a. Other possible blowing agents are alkanes (halogenated alkanes in pure form and/or as a mixture), or further products which release gasses such as $N_2$ or $CO_2$ by thermal degradation, such as for example the azo-compounds, the N-nitroso-compounds, the sulfonyl hydrazides..., or products which release gasses by chemical decomposition, such as for example the alkaline earth and alkaline carbonates under influence of an acid medium. The amount of blowing agent used in the formulation depends on the density to be obtained. Use is usually made of 0-50 parts by weight of blowing agent per 100 parts by weight of resin.

In order to be able to obtain a same type of cellular structure with these alternative blowing agents as with the

conventional CFC's, the curing and therefore the foaming of the phenolic resin is effected in the process according to the invention in the presence of an either or not alkylated morpholine which is fluorated whether completely or not and which corresponds to the following general structural formula :

$$C_n H_x F_y NO$$

wherein :

$$n \geq 4$$

$$x = 2n + 1 - y$$

$$y = 2n + 1 - x.$$

As it will become apparent hereinafter, such a morpholine permits also in this way to improve the general physical properties of the phenolic foam. In particular, a more flexible foam can be obtained. Amongst the hereabove indicated morpholines, preference is given to perfluoro-N-methylmorpholine.

An important advantage of the use of such a morpholine consists in that the temperature in the foaming resin may rise highest without resulting in the rupture of a too large amount of cells, especially in the middle of the foam where the temperature reaches the highest value due to the exothermic reaction. For the production of foam blocks, the highest temperature is obtained in average some hours after the start of the curing process.

In an effective embodiment of the process according to the invention, the internal foam temperature is allowed to rise upto above 85°C, and preferably upto a temperature situated between 87 and 130°C. A particular preference is given to allowing the temperature to rise upto 88 to 95°C. In this way, it is possible to produce a rigid but less friable phenolic foam compared to foams wherein the foam temperature was kept below 85°C.

Since it is already known to control the foam temperature, this will not be discussed here very thoroughly. In particular for block foam, it can be argued in general that the maximum internal temperature which will be reached is mainly dependent on the exothermicity of the foaming phenolic resin and less of the ambient or furnace temperature in view of the insulation properties of the phenolic foam. The furnace temperature is mainly adjusted for rendering the temperature gradient in the foam block as small as possible. For laminate foam, on the contrary, the internal foam temperature can be better controlled by adjusting the ambient or furnace temperature. Indeed, such foams have only a limited thickness.

In order to obtain the hereabove described effects onto the cell structure and onto the rupture of the cells, an amount of 0.01 to 10 parts by weight of the morpholine and in particular of the perfluoro-N-methylmorpholine per 100 parts by weight of resin appeared to be effective. Preferably, use is made of about 0.05 to 5 parts by weight of the morpholine per 100 parts by weight of resin. It is clear that these parts by weight of resin relate to the entire resin, thus comprising also the amount of the solvent present in the used resin.

In most cases, a catalyst is required for the curing of the foam system. However, in those cases wherein a particularly active phenolic resin with thermo-curing properties is used, the supply of energy, such as for example in the form of a temperature increase, may cause sufficient catalytic effect so that the addition of a catalyst becomes facultative. Moreover, depending on the resin type base, a catalyzed curing of the resin can be effected.

As catalyst use can be made of an inorganic acid, such as sulphuric acid, phosphoric acid, etc... or a mixture thereof, or of an organic strong acid such as for example the arylsulphonic acids of the general type :

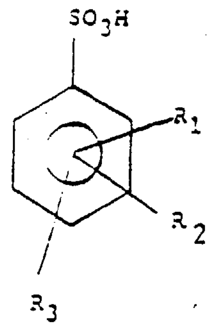

wherein $R_1$, $R_2$ and $R_3$ represent an alkyl group, halogen, amine, $SO_3H$, aryl group of a combination thereof. Other useful arylsulphonic acids are the products, such as for example the substituted naphthalene sulphonic acids. Preferably, use is made of the pure forms, or of mixtures of these compounds. As indicated in US patent No. 4,478,958, the determining factor for the usefulness is not the kind of the acid but the acidity constant and the compatibility of the acid with the resin and with the solvents in the resin. As known, the phenolic resins can also be cured in an alkaline medium.

The amount of catalyst comprises 0.5 to 40 parts by weight per 100 parts by weight of resin. This amount is usually smaller than 25 parts by weight.

The foam system according to the invention comprises, in addition to the phenolic resin, the blowing agent and usually the catalyst, preferably further a tensio-active compound as emulsion and foam stabilizer. This tensio-active compound may be of the organic type, such as for example the condensation products of alkylene oxides (such as for example ethylene oxide en propylene oxide or a combination thereof) with alkylphenols (such as for example nonylphenol, dodecylphenol, etc...). Also the ethoxylated products of esterified oil are examples of known foam stabilizers (see US patent No. 3,779,959). Other types of tensio-active compounds, such as for example siloxane-oxyalkylene copolymers, which comprise essentially Si-O-C and/or Si-C links, may also be used to this end. Usually, use is made of amounts of between 0.1 and 10 parts by weight per 100 parts by weight resin. Preferably, use is made of 1 to 6 parts by weight.

Further, a number of additives can be added to control the physical properties of the final product. Amongst these components, the following compounds can be classified :

- urea and/or resorcinol or derivatives thereof for masking the releasing amounts of aldehyde. The amounts which are used in this respect are situated between 0 and 15 parts by weight per 100 parts by weight resin. More specifically, amounts are used of between 1 and 5 parts by weight ;
- plasticizers, such as for example dimethylterephthalate, dimethylphthalate, polymeric phthalic acid esters, sulphone amides, etc... De used amounts are usually smaller than 25 parts by weight per 100 parts by weight resin ;
- other additives, such as fillers, dyes, etc... may be applied in this invention. The amounts used thereof may amount to 50 parts by weight per 100 parts by weight resin, and this depending on the nature of the additive.

A further additive proposed by the invention is potassium acetate, more particularly in an amount of upto 2 parts by weight at the most per 100 parts by weight phenolic resin. It was found that this potassium acetate can be used in the foam system for pushing back the possible occurrence of air holes in the phenolic foam.

In a particular embodiment of the process according to the invention, the phenolic foam is produced by mixing the resin, the catalyst, the blowing agent, the foam stabilizer and possibly other additives with one another, whereby the foam system expands substantially immediately under atmospheric pressure.

For giving the foam the desired shape, the reacting mixture can be applied in a closed mould in such an amount that, due to the expansion of the foam, the foam fills the entire mould and a pressure is built up. This pressure may rise in certain circumstances upto more than 1000 kPa. For the production of low density foams, the built-up pressure remains usually below 80 kPa. Partly due to the exothermicity of the reaction and the increased temperature of the mould, a rigid foam plate is formed.

Another possibility for processing the phenolic resins is the continuous method. The components are mixed hereto under pressure in a mixing chamber. The mixture is applied either through an arm moving to and fro, or through a special distribution system, consisting for example of a number of mixing heads which are installed next to one another, or through any other system whereby the material can be distributed homogeneously. The reacting foam is applied onto a bottom covering, which may be of any kind, and which is put in motion onto a bottom conveyor belt.

The expanding foam is brought into contact with an upper covering which is moved through an upper conveyor belt. The distance between the conveyor belts determines the thickness of the produced plates. Further expansion of

the foam is limited through so-called pressure plates, so that a pressure arises which is usually higher than 10 kPa and which comprises preferably about 40 kPa. The increased temperature at the conveyor belts, which are heated upto a temperature of 60 to 70°C, provides for a faster curing of the foam. The foams produced in this way have a density which is usually situated between 20 and 80 kg/m$^3$.

The phenolic foams can also be produced in blocks, whereto the expanding mixture is introduced into an open mould and cures further under atmospheric conditions.

Another way for producing phenolic foam is an "in situ" foam formation. To this end, the reacting mixture is applied with an appropriate distribution system onto the surfaces to be treated.

Another possibility consists in injecting the expanding foam between two fixed plates, such as for example steel plates, which are mounted in a press so that the entire expansion of the foam is limited. A typical application for such produced sandwich panels consists in the use as construction material.

The phenolic foams may be provided either or not with a covering. The most usual coverings are of the type :

- non-woven glass fibres with organic binder such as urea/formaldehyde, melamine/formaldehyde, polyvinyl alcohol, etc...
- glass fleece with mineral coating, bitumen, etc...
- glass fleece in combination with Al laminates
- rigid coverings, such as for example gypsum boards, wood, percite, etc...
- metal foil.

In the following examples, the process according to the invention and in particular the effects of the use of perfluoro-N-methylmorpholine will be illustrated more into details.

The properties indicated in these examples were established according to the following measuring methods :

- friability (%) : ASTM C421
- closed cells (%) : ASTM D2856, part C
- λ-value (W/mK) : ISO 2581
- rigidity (kPa) : DIN 53 421

Examples 1-5

In these examples, a phenolic resin was first prepared in a known way having the characteristics as shown in Table 1 and this starting from phenol and formaldehyde.

Table 1 : Characteristics of the phenolic resin

| | |
|---|---|
| formaldehyde/phenol ratio | 1.4 / 1 |
| % water | 15.6 |
| % free phenol | 7.6 |
| % free formaldehyde | 0.4 |
| pH | 5.2 |

The used foam formulations are represented in Table 2

Table 2

| Foam formulations of examples 1-5 | | | | | |
|---|---|---|---|---|---|
| Example | 1 | 2 | 3 | 4 | 5 |
| Resin | 100 | 100 | 100 | 100 | 100 |
| Surfactant G 1284* | 4 | 4 | 4 | 4 | 4 |
| Dimethylphthalate | 5 | 5 | 5 | 5 | 5 |

* : trademark of ICI (= Castor oil derivative + 40 EO).

Table 2 (continued)

| Foam formulations of examples 1-5 | | | | | |
|---|---|---|---|---|---|
| Example | 1 | 2 | 3 | 4 | 5 |
| HCFC 141b | 12 | 12 | 12 | 12 | 12 |
| Perfluoro-N-methyl morpholine | 0 | 0.05 | 0.3 | 1 | 0.3 |
| Catalyst [65% $H_2SO_4$] [85% $H_3PO_4$] 75/25 | 15 | 15 | 15 | 15 | 13 |

The foams were produced in blocks of 1 x 1 x 3 m in an open metal mould which was placed in a furnace on a temperature of 60°C. The obtained characteristics are summarized in Table 3.

Table 3

| Characteristics of the foams from Examples 1-5 | | | | | |
|---|---|---|---|---|---|
| | 1 | 2 | 3 | 4 | 5 |
| Density (kg/m$^3$) | 32.4 | 33 | 32.9 | 34 | 36 |
| Max.exotherm (°C) | 101 | 99 | 100 | 98 | 92 |
| Friability (%) | 33.4 | 27 | 25 | 25 | 26 |
| Closed cells (%) | 79 | 85 | 92 | 91 | 91 |
| $\lambda$-value (W/mK) | 0.0321 | 0.0210 | 0.0185 | 0.0187 | 0.0184 |

It is clear that example 1 is not according to the invention but has been given only as comparative example.

Examples 1-5 demonstrate clearly the effect of perfluoro-N-methylmorpholine : the high temperatures obtained in the curing foam after about 5 to 6 hours result in partially open cell material (example 1). The addition of small amounts of perfluoro-N-methylmorpholine causes an unexpected improvement of the percentage closed cells, $\lambda$-value and friability. This shows that the high exotherm which provides for an excellent curing of the foam, does not have any disadvantageous effect on the closed cellular nature of the system.

Examples 6-9

In these examples a phenolic resin was first prepared in a known way having the characteristics as shown in Table 4 and this also starting from phenol and formaldehyde.

Table 4

| Characteristics of the resin employed in examples 6-9. | |
|---|---|
| Formaldehyde/phenol ratio | 1.5/1 |
| % water | 16 % |
| % free phenol | 6.8 |
| % free formaldehyde | 0.25 |
| pH | 5.0 |

The employed formulations are shown in Table 5.

Table 5

| Foam formulations of examples 6-9 | | | | |
|---|---|---|---|---|
| Examples | 6 | 7 | 8 | 9 |
| Resin | 100 | 100 | 100 | 100 |
| Surfactant G 1284* | 4.5 | 4.5 | 4.5 | 4.5 |
| Dimethylphthalate | 5 | 5 | 5 | 5 |
| HCFC 141b | 11 | - | - | - |
| HCFC 123 | - | 13 | - | - |
| 2-chloropropane | - | - | 8 | - |
| pentane | - | - | - | 8 |

Table 5 (continued)

| Foam formulations of examples 6-9 | | | | |
|---|---|---|---|---|
| Examples | 6 | 7 | 8 | 9 |
| perfluoro-N-methylmorpholine | 0.9 | 0.9 | 0.9 | 0.9 |
| [50% $H_2SO_4$] [85% $H_3PO_4$] (80/20) | 17 | 17 | 17 | 17 |

The foams were produced in the same way as in examples 1-5 in blocks of 1 x 1 x 3 m.

The obtained results are summarized in Table 6.

Table 6

| Properties of the foams from examples 6-9 | | | | |
|---|---|---|---|---|
| Example | 6 | 7 | 8 | 9 |
| Density (kg/$m^3$) | 45 | 47.2 | 46.3 | 44.2 |
| Max.exotherm (°C) | 89 | 91 | 89 | 92 |
| Friability (%) | 10 | 15 | 16 | 10 |
| Closed cells (%) | 93.4 | 91.3 | 92.7 | 89.2 |
| λ-value (W/mK) | 0.0171 | 0.0182 | 0.0187 | 0.0205 |
| Rigidity (kPa) | 247 | 238 | 225 | 254 |

As it appears from these examples, perfluoro-N-methylmorpholine allows to cure the material at temperatures situated between 88 and 95°C without obtaining bad λ-values. The low friability and the high rigidity of the material are the results of this good curing.

The fact that in these examples 6-9 the temperature rose less high than in examples 1-5 is due to the lower reactivity of the phenolic resin.

Examples 10-11

In these examples, a phenolic resin was first prepared in a known way having the characteristics as represented in Table 7 and this also starting from phenol and formaldehyde.

Table 7

| Properties of the foam employed in examples 10-11 | |
|---|---|
| Formaldehyde/phenol ratio | 2/1 |
| % water | 15.5 |
| % free phenol | 2.9 |
| % free formaldehyde | 3.1 |
| pH | 5 |

The resin such as described in Table 7 was employed for foaming according to the double-belt process between conveyor belts heated to a temperature of about 65°C. The produced foams had a thickness of 7 cm.

The used foam formulations and the obtained properties are shown in Table 8.

Table 8

| Foam formulations and properties | | |
|---|---|---|
| Example | 10 | 11 |
| Resin | 100 | 100 |
| Urea | 4.7 | 4.7 |
| HCFC 141b | 10 | - |
| 2-chloropropane | - | 8 |
| Perfluoro-N-methylmorpholine | 1 | 1 |
| xylene/toluene sulphonic acid | 22 | 22 |

Table 8 (continued)

| Foam formulations and properties | | |
|---|---|---|
| Example | 10 | 11 |
| Density ($Kg/m^3$) | 42.3 | 42.6 |
| Friability (%) | 24 | 22 |
| Closed cells (%) | 92.3 | 93.7 |
| $\lambda$-value (W/mK) | 0.0174 | 0.0186 |
| Rigidity (kPa) | 152 | 165 |

This Table shows that a high closed cell content and a good insulation value are obtained. Further it has been observed that a fine cellular foam structure was obtained which was due amongst others to the presence of perfluoro-N-methylmorpholine in the foam formulations.

## Claims

**Claims for the following Contracting States : BE, CH, DE, ES, FR, GB, IT, LI, NL, SE**

1. A mainly closed cell phenolic foam having a closed cell content of at least 80 % and comprising a phenolic resin, characterized in that it further comprises an either or not alkylated morpholine which is fluorated whether completely or not, and which corresponds to the following general structural formula :

$$C_n H_x F_y NO$$

wherein :

$$n \geq 4$$

$$x = 2n + 1 - y$$

$$y = 2n + 1 - x$$

and which foam is substantially free of fluorochemical surfactants.

2. A phenolic foam according to claim 1, characterized in that it comprises perfluoro-N-methyl morpholine.

3. A phenolic foam according to either one of claims 1 and 2, characterized in that it has a closed cell content of at least 90 %.

4. A phenolic foam according to any one of the claims 1 to 3, characterized in that it comprises 0.01 to 10 parts by weight of said morpholine, and preferably 0.5 to 5 parts by weight thereof, per 100 parts by weight of phenolic resin.

5. A phenolic foam according to any one of the claims 1 to 5, characterized in that it contains a blowing agent which comprises a physical blowing agent from the group of the hydrogenated chlorofluorohydrocarbons such as HCFC 141b, HCFC 123, HCFC 22, HCFC 142b and HCFC 134a, incompletely halogenated hydrocarbons such as 2-chloropropane or hydrocarbons such as isopentane, n-pentane, cyclopentane and hexane, or a combination of these physical blowing agents.

6. A process for producing a mainly closed cell phenolic foam by curing a foam system comprising at least a phenolic resin, a blowing agent and a foam stabilizer, characterized in that said foam stabilizer is substantially free of fluorochemical surfactants and in that said curing is effected in the presence of an either or not alkylated morpholine

which is fluorated whether completely or not, and which corresponds to the following general structural formula :

$$C_n H_x F_y NO$$

wherein :

$$n \geq 4$$

$$x = 2n + 1 - y$$

$$y = 2n + 1 - x.$$

**7.** A process according to claim 6, characterized in that said curing is effected in the presence of perfluoro-N-methylmorpholine.

**8.** A process according to either one of the claims 6 and 7, characterized in that said morpholine, and in particular said perfluoro-N-methylmorpholine, is used in a ratio of 0.01 to 10 parts by weight, and preferably 0.5 to 5 parts by weight, per 100 parts by weight of phenolic resin.

**9.** A process according to any one of the claims 6 to 8, characterized in that said blowing agent comprises up to 50 % by weight at the most, and preferably up to 5 % by weight at the most of completely halogenated chlorofluorohydrocarbons.

**10.** A process according to claim 9, characterized in that said blowing agent is substantially free of completely halogenated chlorofluorohydrocarbons.

**11.** A process according to claim 9 or 10, characterized in that said blowing agent comprises a physical blowing agent from the group of the hydrogenated chlorofluorohydrocarbons such as HCFC 141b, HCFC 123, HCFC 22, HCFC 142b and HCFC 134a, the incompletely halogenated hydrocarbons such as 2-chloropropane or the hydrocarbons such as isopentane, n-pentane, cyclopentane and hexane, or a combination of these physical blowing agents.

**12.** A process according to any one of the claims 6 to 11, characterized in that during the curing the internal foam temperature is allowed to rise up to a temperature higher than 85°C, which temperature is preferably situated between 87 and 130°C and more particularly between 88 and 95°C.

**13.** A process according to any one of the claims 6 to 12, characterized in that the foam system comprises potassium acetate, in particular in an amount of up to 2 parts by weight at the most per 100 parts by weight of phenolic resin.

**14.** A process according to any one of the claims 6 to 13, characterized in that the foam system comprises a plasticizer, in particular a plasticizer selected from the group of dimethyltherephthalate, dimethylphthalate, polymeric phthalic acid esters and sulphone amides.

**15.** A process according to claim 14, characterized in that the foam system comprises dimethylphthalate as plasticizer.

**Claims for the following Contracting States : AT, DK, GR, IE, LU, MC, PT**

**1.** A mainly closed cell phenolic foam having a closed cell content of at least 80 % and comprising a phenolic resin, characterized in that it further comprises an either or not alkylated morpholine which is fluorated whether completely or not, and which corresponds to the following general structural formula :

$$C_n H_x F_y NO$$

wherein :

$$n \geq 4$$

$$x = 2n + 1 - y$$

$$y = 2n + 1 - x.$$

2. A phenolic foam according to claim 1, characterized in that it comprises perfluoro-N-methyl morpholine.

3. A phenolic foam according to either one of claims 1 and 2, characterized in that it has a closed cell content of at least 90 %.

4. A phenolic foam according to any one of the claims 1 to 3, characterized in that it comprises 0.01 to 10 parts by weight of said morpholine, and preferably 0.5 to 5 parts by weight thereof, per 100 parts by weight of phenolic resin.

5. A phenolic foam according to any one of the claims 1 to 5, characterized in that it contains a blowing agent which comprises a physical blowing agent from the group of the hydrogenated chlorofluorohydrocarbons such as HCFC 141b, HCFC 123, HCFC 22, HCFC 142b and HCFC 134a, incompletely halogenated hydrocarbons such as 2-chloropropane or hydrocarbons such as isopentane, n-pentane, cyclopentane and hexane, or a combination of these physical blowing agents.

6. A process for producing a mainly closed cell phenolic foam by curing a foam system comprising at least a phenolic resin and a blowing agent, characterized in that said curing is effected in the presence of an either or not alkylated morpholine which is fluorated whether completely or not, and which corresponds to the following general structural formula :

$$C_n H_x F_y NO$$

wherein :

$$n \geq 4$$

$$x = 2n + 1 - y$$

$$y = 2n + 1 - x.$$

7. A process according to claim 6, characterized in that said curing is effected in the presence of perfluoro-N-methylmorpholine.

8. A process according to either one of the claims 6 and 7, characterized in that said morpholine, and in particular said perfluoro-N-methylmorpholine, is used in a ratio of 0.01 to 10 parts by weight, and preferably 0.5 to 5 parts by weight, per 100 parts by weight of phenolic resin.

9. A process according to any one of the claims 6 to 8, characterized in that said blowing agent comprises up to 50 % by weight at the most, and preferably up to 5 % by weight at the most of completely halogenated chlorofluorohydrocarbons.

10. A process according to claim 9, characterized in that said blowing agent is substantially free of completely halogenated chlorofluorohydrocarbons.

11. A process according to claim 9 or 10, characterized in that said blowing agent comprises a physical blowing agent from the group of the hydrogenated chlorofluorohydrocarbons such as HCFC 141b, HCFC 123, HCFC 22, HCFC 142b and HCFC 134a, the incompletely halogenated hydrocarbons such as 2-chloropropane or the hydrocarbons such as isopentane, n-pentane, cyclopentane and hexane, or a combination of these physical blowing agents.

12. A process according to any one of the claims 6 to 11, characterized in that during the curing the internal foam temperature is allowed to rise up to a temperature higher than 85°C, which temperature is preferably situated between 87 and 130°C and more particularly between 88 and 95°C.

13. A process according to any one of the claims 6 to 12, characterized in that the foam system comprises potassium acetate, in particular in an amount of up to 2 parts by weight at the most per 100 parts by weight of phenolic resin.

14. A process according to any one of the claims 6 to 13, characterized in that the foam system comprises a plasticizer, in particular a plasticizer selected from the group of dimethyltherephthalate, dimethylphthalate, polymeric phthalic acid esters and sulphone amides.

15. A process according to claim 14, characterized in that the foam system comprises dimethylphthalate as plasticizer.

## Patentansprüche

### Patentansprüche für folgende Vertragsstaaten : BE, CH, DE, ES, FR, GB, IT, LI, NL, SE

1. Phenolschaum mit hauptsächlich geschlossenen Zellen, der einen Gehalt an geschlossenen Zellen von mindestens 80 % und weiter ein Phenolharz umfaßt, der dadurch gekennzeichnet ist, daß er weiter ein alkyliertes oder nicht-alkyliertes Morpholin enthält, das vollständig oder unvollständig fluoriert ist, und das die folgende allgemeine Strukturformel aufweist:

$$C_nH_xF_yNO$$

wobei

$$n \geq 4,$$

$$x = 2n + 1 - y,$$

$$y = 2n + 1 - x$$

und der im wesentlichen keine fluorhaltigen Tenside enthält.

2. Phenolschaum nach Anspruch 1, dadurch gekennzeichnet, daß er Perfluor-N-methylmorpholin enthält.

3. Phenolschaum nach Anspruch 1 oder 2, dadurch gekennzeichnet, daß er einen Gehalt an geschlossenen Zellen von mindestens 90 % aufweist.

4. Phenolschaum nach einem der Ansprüche 1 bis 3, dadurch gekennzeichnet, daß er pro 100 Gewichtsteile Phenolharz 0,01 bis 10 Gewichtsteile des Morpholins und vorzugsweise 0,5 bis 5 Gewichtsteile davon enthält.

5. Phenolschaum nach einem der Ansprüche 1 bis 5, dadurch gekennzeichnet, daß er ein Treibmittel enthält, das ein physikalisches Treibmittel aus der Gruppe der hydrierten Chlorfluorkohlenwasserstoffe, wie HCFC 141b, HCFC 123, HCFC 22, HCFC 142b und HCFC 134a, unvollständig halogenierten Kohlenwasserstoffe, wie 2-Chlorpropan oder der Kohlenwasserstoffe, wie Isopentan, n-Pentan, Cyclopentan und Hexan oder eine Kombination dieser physikalischen Treibmittel enthält.

**6.** Verfahren zur Herstellung eines Phenolschaums mit hauptsächlich geschlossenen Zellen durch Härten eines Schaumsystems, das mindestens ein Phenolharz, ein Treibmittel und einen Schaumstabilisator enthält, dadurch gekennzeichnet, daß der Schaumstabilisator im wesentlichen keine fluorhaltigen Tenside aufweist und daß das Härten in Anwesenheit eines alkylierten oder nicht-alkylierten Morpholins durchgeführt wird, das vollständig oder unvollständig fluoriert ist und das die folgenden allgmeine Strukturformel aufweist:

$$C_nH_xF_yNO$$

wobei

$$n \geq 4,$$

$$x = 2n + 1 - y,$$

$$y = 2n + 1 - x.$$

**7.** Verfahren nach Anspruch 6, dadurch gekennzeichnet, daß, daß das Härten in Anwesenheit von Perfluor-N-Methylmorpholin bewirkt wird.

**8.** Verfahren nach einem der Ansprüche 6 und 7, dadurch gekennzeichnet, daß das Morpholin und insbesondere das Perfluor-N-Methylmorpholin in einem Verhältnis von 0,01 bis 10 Gewichtsteile und vorzugsweise 0,5 bis 5 Gewichtsteile pro 100 Gewichtsteile Phenolharz eingesetzt wird.

**9.** Verfahren nach einem der Ansprüche 6 bis 8, dadurch gekennzeichnet, daß das Treibmittel bis zu maximal 50 Gew.-% und vorzugsweise bis zu maximal 5 Gew.-% vollständig halogenierte Chlorfluorkohlenwasserstoffe enthält.

**10.** Verfahren nach Anspruch 9, dadurch gekennzeichnet, daß das Treibmittel im wesentlichen keine vollständig halogenierten Chlorfluorkohlenwasserstoffe aufweist.

**11.** Verfahren nach Anspruch 9 oder 10, dadurch gekennzeichnet, daß das Treibmittel ein körperliches Treibmittel aus der Gruppe der hydrierten Chlorfluorkohlenwasserstoffe, wie HCFC 141b, HCFC 123, HCFC 22, HCFC 142b und HCFC 134a, der unvollständig halogenierten Kohlenwasserstoffe, wie 2-Chlorpropan oder der Kohlenwasserstoffen, wie Isopentan, n-Pentan, Cyclopentan und Hexan oder eine Kombination dieser körperlichen Treibmittel enthält.

**12.** Verfahren nach einem der Ansprüche 6 bis 11, dadurch gekennzeichnet, daß während des Härtens die Schauminnentemperatur bis zu einer Temperatur von über 85°C ansteigen gelassen wird, die vorzugsweise zwischen 87° und 130°C liegt und bevorzugter zwischen 88° und 95°C.

**13.** Verfahren nach einem der Ansprüche 6 bis 12, dadurch gekennzeichnet, daß das Schaumsystem Kaliumacetat enthält, insbesondere in einer Menge von maximal 2 Gewichtsteilen pro 100 Gewichtsteile Phenolharz.

**14.** Verfahren nach einem der Ansprüche 6 bis 13, dadurch gekennzeichnet, daß das Schaumsystem einen Weichmacher enthält, insbesondere einen Weichmacher ausgewählt aus der Gruppe von Dimethylterephthalat, Dimethylphthalat, polymeren Phthalsäureestern und Sulfonamiden.

**15.** Verfahren nach Anspruch 14, dadurch gekennzeichnet, daß das Schaumsystem Dimethylphthalat als Weichmacher enthält.

**Patentansprüche für folgende Vertragsstaaten : AT, DK, GR, IE, LU, MC, PT**

**1.** Phenolschaum mit hauptsächlich geschlossenen Zellen, der einen Gehalt an geschlossenen Zellen von mindestens 80 % und ein Phenolharz enthält, dadurch gekennzeichnet, daß er weiter ein alkyliertes oder nicht-alkyliertes Morpholin enthält, das vollständig oder unvollständig fluoriert ist, und das die folgende allgemeine Strukturformel aufweist:

$$C_nH_xF_yNO$$

wobei

$$n \geq 4,$$

$$x = 2n + 1 - y,$$

$$y = 2n + 1 - x.$$

**2.** Phenolschaum nach Anspruch 1, dadurch gekennzeichnet, daß er Perfluor-N-methylmorpholin enthält.

**3.** Phenolschaum nach einem der Ansprüche 1 und 2, dadurch gekennzeichnet, daß er einen Gehalt an geschlossenen Zellen von mindestens 90 % aufweist.

**4.** Phenolschaum nach einem der Ansprüche 1 bis 3, dadurch gekennzeichnet, daß er pro 100 Gewichtsteile Phenolharz 0,01 bis 10 Gewichtsteile des Morpholins und vorzugsweise 0,5 bis 5 Gewichtsteile davon enthält

**5.** Phenolharz nach einem der Ansprüche 1 bis 5, dadurch gekennzeichnet, daß er ein Treibmittel enthält, das ein physikalisches Treibmittel aus der Gruppe der hydrierten Chlorfluorkohlenwasserstoffe, wie HCFC 141b, HCFC 123, HCFC 22, HCFC 142b und HCFC 134a, der unvollständig halogenierten Kohlenwasserstoffe, wie 2-Chlorpropan oder der Kohlenwasserstoffe, wie Isopentan, n-Pentan, Cyclopentan und Hexan oder eine Kombination dieser physikalischen Treibmittel enthält.

**6.** Verfahren zur Herstellung eines Phenolschaums mit hauptsächlich geschlossenen Zellen durch Härten eines Schaumsystems, das mindestens ein Phenolharz und ein Treibmittel enthält, dadurch gekennzeichnet, daß das Härten in Anwesenheit eines alkylierten oder nicht-alkylierten Morpholins durchgeführt wird, das vollständig oder unvollständig fluoriert ist und das die folgende allgemeine Strukturformel aufweist:

$$C_nH_xF_yNO$$

wobei

$$n \geq 4,$$

$$x = 2n + 1 - y,$$

$$y = 2n + 1 - x.$$

**7.** Verfahren nach Anspruch 6, dadurch gekennzeichnet, daß das Härten in Anwesenheit von Perfluor-N-Methylmorpholin bewirkt wird.

**8.** Verfahren nach einem der Ansprüche 6 und 7, dadurch gekennzeichnet, daß das Morpholin und insbesondere das Perfluor-N-Methylmorpholin in einem Verhältnis von 0,01 bis 10 Gewichtsteilen und vorzugsweise 0,5 bis 5 Gewichtsteilen pro 100 Gewichtsteile Phenolharz eingesetzt wird.

9. Verfahren nach einem der Ansprüche 6 bis 8, dadurch gekennzeichnet, daß das Treibmittel bis zu maximal 50 Gew.-% und vorzugsweise bis zu maximal 5 Gew.-% vollständig halogenierte Chlorfluorkohlenwasserstoffe enthält.

10. Verfahren nach Anspruch 9, dadurch gekennzeichnet, daß das Treibmittel im wesentlichen keine vollständig halogenierten Chlrofluorkohlenwasserstoffe aufweist.

11. Verfahren nach Anspruch 9 oder 10, dadurch gekennzeichnet, daß das Treibmittel ein physikalisches Treibmittel aus der Gruppe der hydrierten Chlorfluorkohlenwasserstoffe, wie HCFC 141b, HCFC 123, HCFC 22, HCFC 142b und HCFC 134a, der unvollständig halogenierten Kohlenwasserstoffe, wie 2-Chlorpropan oder der Kohlenwasserstoffe, wie Isopentan, n-Pentan, Cyclopentan und Hexan oder eine Kombination dieser physikalischen Treibmittel enthält.

12. Verfahren nach einem der Ansprüche 6 bis 11, dadurch gekennzeichnet, daß während des Härtens die Schauminnentemperatur bis zu einer Temperatur von über 85°C ansteigen gelassen wird, die vorzugsweise zwischen 87° und 130°C liegt und bevorzugter zwischen 88° und 95°C.

13. Verfahren nach einem der Ansprüche 6 bis 12, dadurch gekennzeichnet, daß das Schaumsystem Kaliumacetat enthält, insbesondere in einer Menge von maximal 2 Gewichtsteilen pro 100 Gewichtsteile Phenolharz.

14. Verfahren nach einem der Ansprüche 6 bis 13, dadurch gekennzeichnet, daß das Schaumsystem einen Weichmacher enthält, insbesondere einen Weichmacher ausgewählt aus der Gruppe von Dimethylterephtalat, Dimethylphthalat, polymeren Phthalsäureestern und Sulfonamiden.

15. Verfahren nach Anspruch 14, dadurch gekennzeichnet, daß das Schaumsystem Dimethylphthalat als Weichmacher enthält.

## Revendications

**Revendications pour les Etats contractants suivants : BE, CH, DE, ES, FR, GB, IT, LI, NL, SE**

1. Mousse phénolique à cellules essentiellement fermées ayant une teneur en cellules fermées d'au moins 80 % et comprenant une résine phénolique, caractérisée en ce qu'elle comprend de plus une morpholine alkylée ou non qui est fluorée complètement ou non, et qui correspond à la formule structurale générale suivante :

$$C_n H_x F_y NO$$

dans laquelle :

$$n \geq 4$$

$$x = 2n + 1 - y$$

$$y = 2n + 1 - x,$$

et laquelle mousse est essentiellement exempte d'agents tensioactifs fluorochimiques.

2. Mousse phénolique suivant la revendication 1, caractérisée en ce qu'elle comprend de la perfluoro-N-méthyl morpholine.

3. Mousse phénolique suivant l'une ou l'autre des revendications 1 et 2, caractérisée en ce qu'elle a une teneur en cellules fermées d'au moins 90 %.

**4.** Mousse phénolique suivant l'une quelconque des revendications 1 à 3, caractérisée en ce qu'elle comprend 0,01 à 10 parties en poids de ladite morpholine et avantageusement 0,5 à 5 parties en poids de celle-ci, pour 100 parties en poids de résine phénolique.

**5.** Mousse phénolique suivant l'une quelconque des revendications 1 à 4, caractérisée en ce qu'elle contient un agent de soufflage qui comprend un agent de soufflage physique du groupe des chlorofluorohydrocarbones hydrogénés tels que les HCFC 141b, HCFC 123, HCFC 22, HCFC 142b et HCFC 134a, des hydrocarbures incomplètement halogénés tels que le 2-chloropropane ou des hydrocarbures tels que l'isopentane, le n-pentane, le cyclopentane et l'hexane, ou une combinaison de ces agents de soufflage physiques.

**6.** Procédé de production d'une mousse phénolique à cellules essentiellement fermées par durcissement d'un système de mousse comprenant au moins une résine phénolique, un agent de soufflage et un stabilisant de mousse, caractérisé en ce que ledit stabilisant de mousse est essentiellement exempt d'agents tensioactifs fluorochimiques et en ce que le durcissement est effectué en présence d'une morpholine alkylée ou non qui est fluorée complètement ou non, et qui correspond à la formule structurale suivante :

$$C_n H_x F_y NO$$

dans laquelle :

$$n \geq 4$$

$$x = 2n + 1 - y$$

$$y = 2n + 1 - x.$$

**7.** Procédé suivant la revendication 6, caractérisé en ce que le durcissement est effectué en présence de perfluoro-N-méthylmorpholine.

**8.** Procédé suivant l'une ou l'autre des revendications 6 et 7, caractérisé en ce que ladite morpholine, et en particulier la perfluoro-N-méthylmorpholine, est utilisée dans un rapport de 0,01 à 10 parties en poids et avantageusement 0,5 à 5 parties en poids, pour 100 parties en poids de résine phénolique.

**9.** Procédé suivant l'une quelconque des revendications 6 à 8, caractérisé en ce que l'agent de soufflage comprend jusqu'à 50 % en poids tout au plus, et avantageusement jusqu'à 5 % en poids tout au plus de chlorofluorohydrocarbones complètement halogénés.

**10.** Procédé suivant la revendication 9, caractérisé en ce que l'agent de soufflage est essentiellement exempt de chlorofluorohydrocarbones complètement halogénés.

**11.** Procédé suivant l'une ou l'autre des revendications 9 et 10, caractérisé en ce que l'agent de soufflage comprend un agent de soufflage physique du groupe des chlorofluorohydrocarbones hydrogénés tels que les HCFC 141b, HCFC 123, HCFC 22, HCFC 142b et HCFC 134a, les hydrocarbures incomplètement halogénés tels que le 2-chloropropane ou les hydrocarbures tels que l'isopentane, le n-pentane, le cyclopentane et l'hexane, ou une combinaison de ces agents de soufflage physiques.

**12.** Procédé suivant l'une quelconque des revendications 6 à 11, caractérisé en ce que pendant le durcissement on laisse la température de la mousse interne s'élever jusqu'à une température supérieure à 85°C, laquelle température est avantageusement située entre 87 et 130°C et plus particulièrement entre 88 et 95°C.

**13.** Procédé suivant l'une quelconque des revendications 6 à 12, caractérisé en ce que le système de mousse comprend de l'acétate de potassium, en particulier en une quantité atteignant tout au plus 2 parties en poids pour 100 parties en poids de résine phénolique.

**14.** Procédé suivant l'une quelconque des revendications 6 à 13, caractérisé en ce que le système de mousse comprend un plastifiant, en particulier un plastifiant choisi dans le groupe comprenant le diméthyltéréphtalate, le diméthylphtalate, les esters d'acide phtalique polymériques et les sulfone amides.

**15.** Procédé suivant la revendication 14, caractérisé en ce que le système de mousse comprend du diméthylphtalate comme plastifiant.

**Revendications pour les Etats contractants suivants : AT, DK, GR, IE, LU, MC, PT**

**1.** Mousse phénolique à cellules essentiellement fermées ayant une teneur en cellules fermées d'au moins 80 % et comprenant une résine phénolique, caractérisée en ce qu'elle comprend de plus une morpholine alkylée ou non qui est fluorée complètement ou non, et qui correspond à la formule structurale générale suivante :

$$C_n H_x F_y NO$$

dans laquelle :

$$n \geq 4$$

$$x = 2n + 1 - y$$

$$y = 2n + 1 - x.$$

**2.** Mousse phénolique suivant la revendication 1, caractérisée en ce qu'elle comprend de la perfluoro-N-méthyl morpholine.

**3.** Mousse phénolique suivant l'une ou l'autre des revendications 1 et 2, caractérisée en ce qu'elle a une teneur en cellules fermées d'au moins 90 %.

**4.** Mousse phénolique suivant l'une quelconque des revendications 1 à 3, caractérisée en ce qu'elle comprend 0,01 à 10 parties en poids de ladite morpholine et avantageusement 0,5 à 5 parties en poids de celle-ci, pour 100 parties en poids de résine phénolique.

**5.** Mousse phénolique suivant l'une quelconque des revendications 1 à 4, caractérisée en ce qu'elle contient un agent de soufflage qui comprend un agent de soufflage physique du groupe des chlorofluorohydrocarbones hydrogénés tels que les HCFC 141b, HCFC 123, HCFC 22, HCFC 142b et HCFC 134a, des hydrocarbures incomplètement halogénés tels que le 2-chloropropane ou des hydrocarbures tels que l'isopentane, le n-pentane, le cyclopentane et l'hexane, ou une combinaison de ces agents de soufflage physiques.

**6.** Procédé de production d'une mousse phénolique à cellules essentiellement fermées par durcissement d'un système de mousse comprenant au moins une résine phénolique et un agent de soufflage, caractérisé en ce que ledit durcissement est effectué en présence d'une morpholine alkylée ou non qui est fluorée complètement ou non, et qui correspond à la formule structurale suivante :

$$C_n H_x F_y NO$$

dans laquelle :

$$n \geq 4$$

$$x = 2n + 1 - y$$

$$y = 2n + 1 - x.$$

**7.** Procédé suivant la revendication 6, caractérisé en ce que le durcissement est effectué en présence de perfluoro-N-méthylmorpholine.

**8.** Procédé suivant l'une ou l'autre des revendications 6 et 7, caractérisé en ce que ladite morpholine, et en particulier la perfluoro-N-méthylmorpholine, est utilisée dans un rapport de 0,01 à 10 parties en poids et avantageusement 0,5 à 5 parties en poids, pour 100 parties en poids de résine phénolique.

**9.** Procédé suivant l'une quelconque des revendications 6 à 8, caractérisé en ce que l'agent de soufflage comprend jusqu'à 50 % en poids tout au plus, et avantageusement jusqu'à 5 % en poids tout au plus de chlorofluorohydrocarbones complètement halogénés.

**10.** Procédé suivant la revendication 9, caractérisé en ce que l'agent de soufflage est essentiellement exempt de chlorofluorohydrocarbones complètement halogénés.

**11.** Procédé suivant l'une ou l'autre des revendications 9 et 10, caractérisé en ce que l'agent de soufflage comprend un agent de soufflage physique du groupe des chlorofluorohydrocarbones hydrogénés tels que les HCFC 141b, HCFC 123, HCFC 22, HCFC 142b et HCFC 134a, les hydrocarbures incomplètement halogénés tels que le 2-chloropropane ou les hydrocarbures tels que l'isopentane, le n-pentane, le cyclopentane et l'hexane, ou une combinaison de ces agents de soufflage physiques.

**12.** Procédé suivant l'une quelconque des revendications 6 à 11, caractérisé en ce que pendant le durcissement on laisse la température de la mousse interne s'élever jusqu'à une température supérieure à 85°C, laquelle température est avantageusement située entre 87 et 130°C et plus particulièrement entre 88 et 95°C.

**13.** Procédé suivant l'une quelconque des revendications 6 à 12, caractérisé en ce que le système de mousse comprend de l'acétate de potassium, en particulier en une quantité atteignant tout au plus 2 parties en poids pour 100 parties en poids de résine phénolique.

**14.** Procédé suivant l'une quelconque des revendications 6 à 13, caractérisé en ce que le système de mousse comprend un plastifiant, en particulier un plastifiant choisi dans le groupe comprenant le diméthyltéréphtalate, le diméthylphtalate, les esters d'acide phtalique polymériques et les sulfone amides.

**15.** Procédé suivant la revendication 14, caractérisé en ce que le système de mousse comprend du diméthylphtalate comme plastifiant.